# EUROPÄISCHE PATENTSCHRIFT

(11) **EP 0 587 071 B1**
(45) Veröffentlichungstag und Bekanntmachung des Hinweises auf die Patenterteilung: **07.01.1998**
(21) Anmeldenummer: 93114183.2
(22) Anmeldetag: 03.09.1993
(51) Int. Cl.: B01D 61/36, B01D 69/12, B01D 71/20

(54) **Verfahren zur Herstellung einer Polyelektrolyt-Kompositmembran**
Process for the preparation of a polyelectrolyte composite membrane
Procédé pour la préparation d'une membrane composite à base de polyélectrolyte

(30) Priorität: 08.09.1992 DE 4229530
(43) Veröffentlichungstag der Anmeldung: 16.03.1994
(73) Patentinhaber: GKSS-FORSCHUNGSZENTRUM GEESTHACHT GMBH, D-21494 Geesthacht (DE)
(72) Erfinder: Aderhold, Marion, D-2059 Hohnstorf (DE); Behling, Rolf-Dieter, D-2000 Hamburg 55 (DE); Peinemann, Klaus-Viktor, D-2054 Geesthacht (DE); Scharnagel, Nico, D-2000 Hamburg 70 (DE); Schwarz, Hans-Hartmut, D-1585 Potsdam (DE); Paul, Dieter, D-1532 Kleinmachnow (DE); Richau, Klaus, D-1193 Berlin (DE); Apostel, Regine, D-1532 Kleinmachnow (DE); Frigge, Gisela, D-1580 Potsdam (DE)
(74) Vertreter: Niedmers, Ole, Dipl.-Phys.

(56) Entgegenhaltungen:
- DD-A- 285 555
- DD-A- 285 556
- DD-A- 292 846
- DE-A- 3 801 690

## Beschreibung

Die Erfindung betrifft ein Verfahren zur Herstellung einer Polyelektrolyt-Komposit-Membran.

Zur Entwässerung organischer Lösungsmittel mittels Pervaporation wurden bereits zahlreiche dichte Polymermembranen beschrieben, bei denen bevorzugt das Wasser transportiert wird (Proceedings of 5th Int. Conference on Pervaporation Processes in the Chemical Industry, Bakish, Material Corp., Englewood NJ 07631, 1991; Publikation: Tsuyumoto, M., Karakane H., Maeda Y., Tsugaya H.; Desalination, 80, 1991, 139-158; Karakane H., Tsuyumoto M., Maeda Y., Satoh K., Honda Z.; Proceedings of the 3rd Int. Conference on Pervaporation Processes in the Chemical Industry, Nancy, France 1988).

Aus der DE-A-38 01 690 ist eine Polymer-Komposit-Membran bekannt, die zur Entwässerung von organischem Material eingesetzt wird. Die Membran setzt sich aus Polyelektrolyten zusammen, wobei das Anion bevorzugt auf Basis der Polyacrylsäure gebildet wird. Diese Polyelektrolyte werden nacheinander auf eine Ultrafiltrations-Polyethersulfon-Trägermembran aufgetragen, wobei lediglich die zweite Schicht durch Tauchen aufgebracht wird (Beispiele 1-4).

Polyelektrolytkomplexe für die hier in Rede stehenden Membranen sind auch in der DD-A-285 555, DD-A-285 556 und DD-A-292 846 beschrieben. Diese bekannten Membranen sind zwar effektiver als die weiter oben beschriebenen Membranen, haben jedoch den Nachteil eines hohen Masseneinsatzes der den Polyelektrolytkomplex bildenden Bestandteile. Zur Herstellung dieser Membranen werden zwei Lösungen der anionischen bzw. kationischen Komponenten nacheinander und übereinander auf einem geigneten Trägermaterial, z.B. einer Trägermembran, ausgestrichen. Zudem verfügen diese bekannten Membranen nur über eine geringe mechanische Stabilität.

Aufgabe der vorliegenden Erfindung ist es, ein verbessertes Verfahren zur Herstellung einer Polyelektrolyt-Komposit-Membran bereitzustellen.

Gelöst wird diese Aufgabe durch die Lehre des Anspruches 1.

Die erfindungsgemäß erhältliche Membran ist aus einem Polymerträger und einer darauf angebrachten trennaktiven Schicht ausgebaut. Die trennaktive Schicht, die beispielsweise in Form eines dünnen Filmes vorliegt, ist aus einem Polyelektrolytkomplex aufgebaut, der aus einer anionischen Polyelektrolytkomponente und einer kationischen Polyelektrolytkomponente zusammengesetzt ist. Bei der anionischen Polyelektrolytkomponente handelt es sich um wasserlösliche Sulfatsalze von polymeren Verbindungen, während es sich bei der Polyanionischen Polyelektrolytkomponente um wasserlösliche Dimetyhldiallylammoniumsalze handelt.

Die erfindungsgemäß erhältliche Membran dient zur Entwässerung organischer Stoffe, beispielweise Lösungsmittel, oder von Stoffgemischen (vorzugsweise Alkohole, Ketone, Aldehyde, Säuren und Amine) mittels Pervaporation oder zur Abtrennung von Wasserdampf aus organischen Stoffen oder Stoffgemischen, wie z.B. Wasserdampf aus Methan, mittels Gastrennung. Diese Membran sollte natürlich nur bei Lösungsmitteln oder Gasen Anwendung finden, die sich gegenüber dieser Membran inert verhalten.

Das Anwendungsgebiet der erfindungsgemäß erhältlichen Membran liegt in der stoffwandelnden Industrie, der Biotechnologie und der Lebensmittelindustrie.

Bei der anionischen Polyelektrolyt-komponente der erfindungsgemäß erhältlichen Membran handelt es sich vorzugsweise um Cellulosesulfat. Als bevorzugte anionische Polyelektrolytkomponente dient Poly-Dimethyldiallylammoniumchlorid. Die Polyelektrolyte bzw. Polyelektrolytkomponenten des Polyelektrolytkomplexes sind auf einen Polymerträger aufgebracht. Bei diesem Polymerträger handeltes sich vorzugsweise um ein poröses, insbesondere mikroporöses Flächengebilde bzw. Membran, insbesondere eine Flachmembran. Als Polymerträger können ferner ein Vlies oder ein Gewebe Anwendung finden. Alle diese Polymerträger können üblicher Natur und Zusammensetzung sein.

Werden als Polymerträger poröse Membranen eingesetzt, dann bestehen diese vorzugsweise aus Polyacrylnitril (PAN), Polyetherimid (PEI), Polyvinylidenfluorid (PVDF), Polysulfon (PS) oder Polyhydantion (PH). Natürlich können auch andere bekannte Polymermaterialen eingesetzt werden.

Erfindungsgemäß zum Einsatz gebrachte Vliese bestehen vorzugsweise aus Polyester, Polypropylen oder Polyvinylensulfid. Erfindungsgemäß eingesetzte Gewebe bestehen vorzugsweise aus Feinseide, wobei auch im Falle der Vliese und Gewebe auch andere Polymermaterialien verwendet werden können.

Zur Herstellung der erfindungsgemäßen Membran werden die einzelnen Bestandteile des Polyelektrolytkomplexes, das heißt die Polyelektrolytkomponenten, einzeln und somit getrennt voneinander auf den Polymerträger aufgebracht bzw. aufgetragen. Dazu wird vorzugsweise die anionische Polyelektrolytkomponente und im Anschluß daran die kationische Polyelektrolytkomponente auf den Polymerträger aufgebracht, wobei die Reihenfolge gewünschtenfalls auch umgekehrt werden kann.

Die Aufbringung der einzelnen Polyelektrolytkomponenten auf die Trägerschicht wird aus wäßrigen Medien mit einem Masseanteil an Komponente von 1 bis 40 % vorgenommen, nämlich durch Tauchen des Polymerträgers in die wäßrigen Lösungen. Dabei wird vorzugsweise nach dem Aufbringen der einzelnen Komponenten getrocknet. Mit anderen Worten, zwischen den einzelnen Verfahrensschritten und auch nach dem letzten Verfahrensschritt der Schichtbildung erfolgt vorzugsweise eine Trocknung. Die Lösung mit dem Polyelektrolytkomponenten ist vorzugsweise mit ionischen und/oder nichtionischen Zusätzen, z.B. Salzen versetzt.

Die erfindungsgemäß erhältliche Membran zeichnet sich durch eine hohe Wasserpermeabilität sowie durch eine gute Selektivität für Wasser und Wasserdampf gegenüber anderen Komponenten aus. Sie ist zudem mehrfach verwendbar, besitzt eine erhöhte Stabilität gegenüber Polyelektrolytmembranen, die nicht als Kompositmembranen ausgebildet sind und ist einfach handhabbar. Diese Membran ist zudem auf Membranzieh- und -beschichtungsmaschinen im technischen Maßstab einfach herstellbar. Sie kann zudem zu Membrantaschen verschweißt werden, die beispielsweise wiederum als Trennelemente in Taschenmodulen eingesetzt werden können. Die Schweißnähte der Membran sind dabei dicht und stabil. Das Verfahren zu ihrer Herstellung sowie ihre Verwendung sind in den nachstehenden, bevorzugte Ausführungsformen beschreibenden Beispielen näher erläutert.

### Beispiel 1

Mittels einer Maschine wird bei konstanter Geschwindigkeit eine Polyelektrolytschicht auf den Polymerträger aufgebracht durch Tauchen des mikroporösen Polymerträgers auf Basis von Polyvinylidenfluorid in eine 2%ige wäßrige Cellulosesulfatlösung als anionische Polyelektrolytkomponente. Nach dem Trocknen bei Raumtemperatur wird der so beschichtete mikroporöse Polymerträger nach dem gleichen Verfahren mit einer 5%-igen wäßrigen Lösung von Dimetyldiallylammoniumchlorid beschichtet. Während des Tauchvorganges formiert sich der Polyelektrolytkomplex (Symplex). Anschließend wird wiederum bei Raumtemperatur getrocknet.

Unter Verwendung der so erhaltenen Membran wurde ein Gemisch aus Alkohol und Wasser in einer üblichen Pervaporationsapparatur entwässert. Es wurden folgende Ergebnisse erhalten:
- Ethanol/Wasser (90/10): T = 20°C Jv = 0,8 kg/m3h α = 121

### Beispiel 2

Es wird eine Membran wie im Beispiel 1 beschrieben hergestellt, wobei als mikroporöser Polymerträger jedoch ein solcher auf Basis von Polyhydantoin anstelle von Polyvinylidenfluorid eingesetzt wird. Mit dieser Membran wurde, wie im Beispiel 1 beschrieben, ein Gemisch aus Alkohol und Wasser entwässert. Die dabei erhaltenen Ergebnisse sind in folgende:
- Ethanol/Wasser (90/10): T = 20°C Jv = 1,0 kg/m3h α = 115

Beispiel 3 Es wird wie im Beispiel 1 verfahren. Allerdings wird der Polymerträger zuerst in eine 5%-ige wäßrige Lösung der kationischen Polyelektrolytkomponete eingetaucht und erst im Anschluß daran in die 2%-ige wäßrige Lösung der anionischen Polyelektrolytkomponente eingetaucht. Die Ergebnisse bei der Entwässerung waren folgende:
- Ethanol/Wasser (90/10): T = 20°C Jv = 0,4 kg/m3h α = 224
T = 50°C Jv = 1,2 kg/m3h α = 251

Beispiel 4 Es wird wie im Beispiel 3 verfahren. Allerdings wird die Konzentration der wäßrigen Lösung der kationischen Polyelektrolytkomponente auf 2% reduziert. Bei der Entwässerung wurden folgende Ergebnisse erhalten:
- Ethanol/Wasser (90/10): T = 20°C Jv = 0,3 kg/m3h α = 277
T = 50°C Jv = 0,5 kg/m3h α = 248
- Ethanol/Wasser (80/20): T = 20°C Jv = 1,2 kg/m3h α = 120
T = 50°C Jv = 3,0 kg/m3h α = 83

### Beispiel 5

Es wird wie im Beispiel 1 verfahren. Allerdings wird das Material nach jedem Tauchvorgang bei 70°C getrocknet. Die bei der Entwässerung erzielten Ergebnisse sind folgende:
- Ethanol/Wasser (90/10): T = 20°C Jv = 0,2 kg/m3h α = 624
T = 50°C Jv = 0,6 kg/m3h α =
- 799 Ethanol/Wasser (80/20): T = 20°C Jv = 0,8 kg/m3h α = 281
T = 50°C Jv = 1,6 kg/m3h α = 211

### Beispiel 6

Es wird wie im Beispiel 5 verfahren. Allerdings wird die fertige Membran in einer Lösung aus 20% Wasser in Ethanol während eines Zeitraums von ca. 30 min nachgewaschen. Bei der Entwässerung wurden folgende Ergebnisse erhalten:
- Ethanol/Wasser (90/10): T = 20°C Jv = 0,2 kg/m3h α = 279
T = 50°C Jv = 0,6 kg/m3h α = 396

Im Rahmen der vorliegenden Unterlagen bezieht sich die %-Angabe auf Gewichts-%, sofern nichts anderes angegeben ist.

## Patentansprüche

1. Verfahren zur Herstellung einer Polyelektrolyt-Komposit-Membran aus einem Polymerträger und einer darauf aufgebrachten trennaktiven Schicht in Form eines Polyelektrolyt-Komplexes aus einer anionischen Polyelektrolyt-Komponente in Form eines wasserlöslichen Sulfatsalzes einer polymeren Verbindung und aus einer kationischen Polyelektrolyt-Komponente in Form mindestens eines wasserlöslichen Polydimethyldiallylammoniumsalzes, dadurch gekennzeichnet, daß man zur Ausbildung des Polyelektrolyt-Komplexes die Polyelektrolyt-Komponenten durch aufeinanderfolgendes Tauchen des Polymerträgers in eine jeweils 1 bis 40-Gew.-%-ige wäßrige Lösung der jeweiligen Polyelektrolyt-Komponente nacheinander auf den Polymerträger aufbringt.

2. Verfahren nach Anspruch 1, dadurch gekennzeichnet, daß man zuerst die anionische Polyelektrolyt-Komponente und dann die kationische Polyelektrolyt-Komponente auf den Polymerträger aufbringt.

3. Verfahren nach Anspruch 1 oder 2, dadurch gekennzeichnet, daß man nach dem Aufbringen einer Polyelektrolyt-Komponente trocknet.

4. Verfahren nach einem der Ansprüche 1 bis 3, dadurch gekennzeichnet, daß man die wäßrige Lösung mit ionischen und/oder nicht-ionischen Zusätzen versieht.

5. Verfahren nach einem der vorhergehenden Ansprüche, dadurch gekennzeichnet, daß man als anionische Polyelektrolyt-Komponente ein Cellulosesulfat und als kationischen Polyelektrolyt-Komponente Polydimethyldiallylammoniumchlorid einsetzt.

6. Verfahren nach einem der vorhergehenden Ansprüche, dadurch gekennzeichnet, daß als Polymerträger ein poröses, insbesondere mikroporöses Flächengebilde und insbesondere eine Flachmembran, eine Hohlfadenmembran, ein Vlies oder ein Gewebe einsetzt.

7. Verfahren nach einem der vorhergehenden Ansprüche, dadurch gekennzeichnet, daß man als Polymerträger eine poröse Membran aus Polyacrylnitril, Polyetherimid, Polyvinylidenfluorid, Polysulfon oder aus Polyhydantoin, ein Vlies aus Polyester, Polypropylen oder aus Polyphenylensulfid oder ein Gewebe aus Feinseide einsetzt.

## Claims

1. Process for manufacturing a polyelectrolytic composite membrane from a polymer carrier coated with a separating layer in the form of a polyelectrolytic complex, which in turn comprises an anionic polyelectrolytic component in the form of a water-soluble sulphate salt of a polymer compound and a cationic polyelectrolytic component in the form of at least one water-soluble polydimethyl diallyl ammonium salt, characterised in that, in order to form the polyelectrolytic complex, the polyelectrolytic components are deposited on the polymer carrier by immersing the polymer carrier successively in aqueous solutions of the respective polyelectrolytic components with weight percentages ranging from 1 to 40.

2. Process according to Claim 1, characterised in that the anionic polyelectrolytic component is deposited on the polymer carrier before the cationic polyelectrolytic component.

3. Process according to Claims 1 or 2, characterised in that the polymer carrier is dried after the deposition of each polyelectrolytic component.

4. Process according to one of Claims 1 to 3, characterised in that the aqueous solution is enriched with ionic and/or non-ionic additives.

5. Process according to one of the preceding Claims, characterised in that a cellulose sulphate is used as an anionic polyelectrolytic component and a polydimethyl diallyl ammonium chloride is used as a cationic polyelectrolytic component.

6. Process according to one of the preceding Claims, characterised in that the polymer carrier consists of a porous, or more specifically a microporous planar structure, preferably in the form of a flat membrane, hollow-fibre membrane, fibrous mat or woven fabric.

7. Process according to one of the preceding Claims, characterised in that the polymer carrier consists of a porous membrane made of polyacrylnitrile, polyetherimide, polyvinylidene fluoride, polysulfone or polyhydantoin, a fibrous mat made of polyester, polypropylene or polyphenylene sulphide, or a woven fabric made of fine silk.

## Revendications

1. Procédé de préparation d'une membrane composite de polyélectrolyte constituée d'un support polymère sur lequel est déposée une couche de séparation active sous forme d'un complexe de polyélectrolyte d'un composant polyélectrolyte anionique sous forme d'un sel sulfate hydrosoluble d'un composé polymère et d'un composant polyélectrolyte cationique sous forme d'au moins un sel de polydiméthyl-diallylammonium hydrosoluble, caractérisé en ce que, en vue de formation du complexe de polyélectrolytes, on dépose les composants polyélectrolytes, les uns après les autres, par trempe successive du support polymère dans une solution aqueuse ayant une concentration de 1 à 40% en poids du composant polyélectrolyte respectif.

2. Procédé selon la revendication 1, caractérisé en ce que l'on dépose sur le support polymère d'abord le composant polyélectrolyte anionique et ensuite le composant polyéletrolyte cationique.

3. Procédé selon la revendication 1 ou 2, caractérisé en ce qu'on effectue un séchage après dépôt d'un composant polyélectrolyte.

4. Procédé selon l'une des revendications 1 à 3, caractérisé en ce que l'on pourvoit la solution aqueuse de matières d'addition ioniques et/ou non ioniques.

5. Procédé selon l'une des revendications précédentes, caractérisé en ce que l'on utilise comme composant polyélectrolyte anionique un sulfate de cellulose et comme composant polyélectrolyte cationique un poly(chlorure de diméthyldiallylammonium).

6. Procédé selon l'une des revendications précédentes, caractérisé en ce que l'on utilise en tant que support polymère un article plat poreux, en particulier microporeux et en particulier une membrane plate, une membrane à fibres creux, une nappe ou un tissu.

7. Procédé selon l'une des revendications précédentes, caractérisé en ce que l'on utilise comme support polymère une membrane poreuse en polyacrylonitrile, polyétherimide, poly(fluorure de vinyle), polysulfone ou polyhydantoïne, une nappe de polyester, polypropylène ou poly(phénylène sulfure) ou un tissu de soie fine.
